# EUROPÄISCHE PATENTSCHRIFT

(11) **EP 1 004 234 B1**
(45) Veröffentlichungstag und Bekanntmachung des Hinweises auf die Patenterteilung: **17.09.2003**
(21) Anmeldenummer: 99122469.2
(22) Anmeldetag: 11.11.1999
(51) Int. Cl.: A01F 29/16, A01D 41/12

(54) **Einrichtung zur Überwachung der Einzugsbaugruppe einer landwirtschaftlichen Erntemaschine**
Device for monitoring the feeding module of an agricultural harvesting machine
Dispositif pour la surveillance du module d'alimentation d'une machine agricole de récolte

(30) Priorität: 26.11.1998 DE 19854562
(43) Veröffentlichungstag der Anmeldung: 31.05.2000
(73) Patentinhaber: CLAAS Saulgau GmbH, 88340 Bad Saulgau (DE)
(72) Erfinder: Pollklas, Manfred, 33378 Rheda-Wiedenbrück (DE); Rauch, Hans, 88348 Saulgau (DE)

(56) Entgegenhaltungen:
- WO-A-82/01298
- WO-A-87/04894
- DE-A- 3 532 000
- DE-A- 3 907 960
- FR-A- 2 680 625
- US-A- 4 181 206

## Beschreibung

Die Erfindung bezieht sich auf landwirtschaftliche Erntemaschinen mit Einzugsorganen, insbesondere auf Feldhäcksler für Mais, Gras und dergleichen, mit einer vom Hauptantrieb des Feldhäckslers rotierend antreibbaren, in einem Trommelgehäuse gelagerten Messertrommel, der ein schaltbares Antriebselement nachgeschaltet ist, mit welchem über einen weiteren Antriebszug die Walzen einer mit einer Fremdkörperortungseinrichtung ausgerüsteten Einzugsbaugruppe antreibbar sind, wobei in dem weiteren Antriebszug zum reversierbaren Antreiben der Einzugsbaugruppe ein Wendegetriebe und zum schlagartigen Stillsetzen der Einzugsbaugruppe eine Abschaltkupplung montiert ist, die in eine das Antriebsdrehmoment übertragende und in eine die Drehung der Einzugsbaugruppe blockierende Stellung schaltbar ist.

Bei dem in Frage kommenden Feldhäcksler wird die Messertrommel direkt vom Hauptantrieb angetrieben. Das der Messertrommel nachgeschaltete, schaltbare Antriebselement ist ein Riemenantrieb, dessen antreibende Scheibe auf der Welle der Messertrommel drehfest aufgesetzt ist. Die getriebene Scheibe ist auf eine Welle aufgekeilt, die an der gegenüberliegenden Seite eine Kupplung trägt, die mit einer weiteren Kupplung durch Zahnräder gekoppelt ist. Die beiden Kupplungen sind Teil des schaltbaren Getriebes und werden für die Vorwärts- und Rückwärtsdrehung der Einzugsorgane des Feldhäckslers benötigt. Die auf die Welle aufgesetzte Kupplung kämmt außerdem mit einem Zahnrad, welches das Eingangsglied eines Schaltgetriebes ist. Mit diesem Schaltgetriebe ist außerdem die Abschaltkupplung gekoppelt, damit im Bedarfsfalle die Walzen der Einzugsbaugruppe schlagartig stillgesetzt werden können. Dieses Schaltgetriebe überträgt das Drehmoment über weitere Räder des schaltbaren Getriebes auf eine Welle, die das Drehmoment in ein Stirnradgetriebe einleitet, um die Einzugswalzen und die Vorpreßwalzen anzutreiben. Ein derartiges Antriebssystem bietet den großen Vorteil, daß bei einem Schnellstopp, aufgrund eines Fremdkörpers oder einer Überlastung der Einzugsorgane, die Messertrommel mit einer relativ großen Masse weiter rotieren kann, während die Einzugswalzen und die Vorpreßwalzen schlagartig stillgesetzt werden können. Insgesamt werden dadurch die abzubremsenden Massen so gering wie möglich gehalten. Um den Fremdkörper zu entfernen, oder die Überlastung der Einzugsorgane aufzulösen, ist es erforderlich, daß die Walzen der Einzugsbaugruppe reversierbar antreibbar sind.
Die Vorwahl der Drehrichtung der Einzugsbaugruppe kann von dem Fahrer des Feldhäckslers durch die Betätigung von Schaltelementen in der Fahrerkabine vorgenommen werden.
Kommt es zu einem Schnellstopp der Einzugsbaugruppe, wird gleichzeitig der Riemenspanner des der Messertrommel nachgeschalteten Riemenantriebes mittels eines Hydraulikzylinders so verfahren, daß der Riemen spannungslos wird. Die gesamte Einzugsbaugruppe kommt zum Stillstand und ist von der drehenden Messertrommel abgekoppelt. Zur Deaktivierung der Schnellstoppeinrichtung müssen die Einzugswalzen reversiert werden. Hierzu wird von dem Fahrer ein Schaltelement betätigt, das Wendegetriebe umgeschaltet und der Riemenantrieb eingeschaltet. Mit dem Beginn der Drehung der Einzugsbaugruppe in Reversierdrehrichtung wird die Abschaltkupplung kraftschlüssig und der Einzug reversiert. Wird diese Reversierdrehung von einem Sensor an der Einzugsbaugruppe erkannt wird die Schnellstoppeinrichtung von der Einzugssteuerung deaktiviert. Der Fahrer erhält eine Mitteilung über die Deaktivierung und kann dann den Reversiervorgang durch Beendigung der Schaltelementbetätigung beenden, indem über den Riemenantrieb die Einzugsbaugruppe abgeschaltet wird.
In der Regel wird der den Schnellstopp auslösende Fremdkörper beziehungsweise die Überlastung der Einzugsorgane durch den Reversiervorgang aus dem Einzugsbereich gefördert. Um nun den Fremdkörper zu finden beziehungsweise die Überlastung der Einzugsbaugruppe aufzulösen, ist es
erforderlich, daß sich der Fahrer des Feldhäckslers in den Bereich der Einzugsbaugruppe begibt. Es muß dann sichergestellt sein, daß bei drehender Messertrommel beziehungsweise noch eingeschaltetem Motor der Erntemaschine die Walzen der Einzugsbaugruppe auf keinen Fall in Drehung versetzt werden, da dadurch schwere Unfälle verursacht würden.
Um diese Sicherheit zu gewährleisten, ist bereits aus der DE 30 29 050 ein Verfahren zur Abschaltung eines Stirnradwendegetriebes bei einem Feldhäcksler bekannt. Der Antrieb ist so ausgelegt, daß vom Motor ein Riementrieb angetrieben wird, mit dem unter anderem über einen weiteren Riementrieb ein Stirnradwendegetriebe angetrieben wird, auf dessen Ausgangswelle zwei elektromagnetisch schaltbare Kupplungen angeordnet sind. Ein mit einer Kupplung in Verbindung stehendes Stirnrad kämmt mit einem Stirnrad der Eingangswelle und ein der zweiten Kupplung zugeordnetes Stirnrad kämmt mittels eines Zwischenrades ebenfalls mit einem auf der Eingangswelle aufgesetzten Stirnrad. Dadurch soll erreicht werden, daß rotierende Bauteile in kürzester Zeit zum Stillstand kommen. Dazu werden beide elektromagnetisch schaltbaren Kupplungen gleichzeitig geschaltet und der Einzug blockiert, wodurch die Unfallgefahr beim manuellen Auflösen einer Verstopfung beseitigt werden soll.
Diese Antriebsanordnung ist ausschließlich geeignet, um die Walzen der Einzugsbaugruppe und die Messertrommel im Falle einer Überlastung der Einzugsbaugruppe stillzusetzen. Dazu steht wesentlich mehr Zeit zur Verfügung, als wenn die Fremdkörperortungseinrichtung anspricht, da unbedingt vermieden werden muß, daß der Fremdkörper in die Umlaufbahn der Messertrommel gelangt. Werden die beiden Kupplungen gleichzeitig geschaltet, steht noch eine relativ große Nachlaufzeit zur Verfügung. Außerdem ist nicht gewährleistet, daß die Walzen der Einzugsbaugruppe stillstehen, da es zum Reversiervorgang notwendig ist, die entsprechende Kupplung stromlos zu schalten, damit die Walzen entgegen der ursprünglichen Drehrichtung angetrieben werden können. Um den Antriebszug zu blockieren, müßte dann die besagte Kupplung wieder geschaltet werden, was naturgemäß vom Fahrer nicht durchgeführt wird. Außerdem könnte die Blockierung durch einen Schaltfehler ungewollt wieder aufgehoben werden. Diese vorbekannte Getriebeanordnung bietet deshalb nicht die notwendige Sicherheit für den Fahrer, wenn er sich im Einzugsbereich der Walzen der Einzugsbaugruppe befindet. Außerdem ist die benötigte Zeit zum Stillsetzen dieser Walzen bei der Ortung eines Fremdkörpers wesentlich zu groß. Desweiteren unterliegt diese Anordnung einem hohen Verschleiß, welches die Zuverlässigkeit stark mindert.

Der Erfindung liegt die Aufgabe zugrunde, eine landwirtschaftliche Erntemaschiene der eingangs näher beschriebenen Art in konstruktiv einfacher Weise so zu gestalten, daß ohne nennenswerte Änderungen der Antriebszüge für die Einzugsbaugruppe eine optimale Sicherheit für den Fahrer gegeben ist, wenn dieser sich im Wirkbereich der Einzugsorgane befindet.

Die gestellte Aufgabe wird durch die Merkmale des Kennzeichens des Anspruch 1 gelöst.

Die Überwachungseinrichtung ist in der Lage eine Drehbewegung an der Einzugsbaugruppe zu erkennen und aufgrund dieser Drehbewegung einen Schnellstopp der Walzen in der Einzugsbaugruppe auszulösen. Wird von dem Fahrer der Erntemaschine eine Drehung der Walzen in Arbeitsdrehrichtung oder Reversierdrehrichtung angesteuert, muß die Überwachungseinrichtung ihre Funktion unterbinden. Es ist daher notwendig, daß die Einrichtung mit der Einzugssteuerung, zum Beispiel über ein Daten-Bussystem, in Verbindung steht. Vorteilhaft ist, wenn die Überwachungseinrichtung Teil der Einzugssteuerung ist.
Die Überwachungseinrichtung wird dann aktiviert, das heißt ein Schnellstopp der Einzugsbaugruppe wird von der Überwachungseinrichtung ausgelöst, wenn an der Einzugsbaugruppe eine Drehbewegung erkannt wird, aber an der Einzugssteuerung kein Steuerbefehl zur Drehung der Einzugsbaugruppe vorliegt.
Die Aktivierung kann sich auch auf nur eine Drehrichtung der Einzugsbaugruppe beschränken. Dies hat den Vorteil, daß zwischen den stehenden Walzen eingeklemmtes Emtegut in Reversierdrehrichtung herausgezogen werden kann, ohne das ein Schnellstopp ausgelöst wird.
Eine weitere Ausgestaltung der Überwachungseinrichtung besteht darin, daß mit ihr weitere Überwachungs- beziehungsweise Informationstunktionen im Bereich der Einzugsbaugruppe durchgeführt werden können. So kann zum Beispiel durch sie erkannt werden, wann die gesamten rotierenden Einzugsorgane oder Teile daraus zum Stillstand gekommen sind, wenn dieser vom Fahrer veranlaßt wurde. Dabei erkennt die Überwachungseinrichtung ob die Walzen in der Einzugsbaugruppe ihre Drehzahl vermindern beziehungsweise wie lange es dauert bis die Walzen zum Stillstand kommen. Die Überwachungseinrichtung generiert dann eine Fehlermeldung, wenn sich nicht ein bestimmter Drehzahlabfall einstellt beziehungsweise wenn nicht nach einer bestimmten Zeit die Walzen zum Stillstand gekommen sind.
Femer kann, nach einem Schnellstopp der Einzugsbaugruppe, aus der Stillsetzungszeit eine Information über den Zustand der Abschaltkupplung abgeleitet werden. Ist die Stillsetzungszeit größer als eine vorgegebene Zeit, wird von der Überwachungseinrichtung eine Fehlermeldung generiert
In einer weiteren Ausgestaltung der Erfindung wird die Überwachungseinrichtung erst dann aktiviert, wenn zuvor ein Stillstand der Walzen festgestellt wurde.

Die Einzugssteuerung beinhaltet mindestens einen Sensor der eine Drehzahl von mindestens einem Bauteil oder Antriebsteil der Einzugsbaugruppe erfaßt. Aus den weiteren Eingangsgrößen der Einzugssteuerung kann der Betriebsmodus der Einzugsbaugruppe abgeleitet werden. Besonders vorteilhaft ist, daß die in der Einzugssteuerung vorhandenen Eingangsgrößen für die Überwachungseinrichtung mit verwendet werden können und somit keine zusätzlichen Installationen notwendig sind. Ein separater Sensor kann aber auch an jeder geeigneten Stelle innerhalb des Antriebszuges angebracht werden, der dem von der Messertrommel antreibbaren schaltbaren Antriebselement nachgeschaltet ist.
Ein weiterer Vorteil ist, daß bereits in Betrieb genommene Feldhäcksler nachträglich mit einer separaten Überwachungseinrichtung und dem zugehörigen Sensor nachgerüstet werden können.

Eine einfache Ausführung für die Überwachungseinrichtung wird erreicht, wenn die Einrichtung so ausgelegt ist, daß beim Erkennen einer Drehbewegung eines durch den aktivierten Sensor zu überwachenden Bauteils der Einzugsbaugruppe oder eines Getriebeteiles dieser ein elektrisches Signal zur Schaltung der Abschaltkupplung in die Blockierstellung auslöst. Damit die Überwachungseinrichtung jederzeit funktionsfähig ist und Fehlfunktionen ausgeschlossen werden können, ist vorgesehen, daß der Sensor einem Antriebsteil eines in den Antriebszug für die Einzugsbaugruppe liegenden Getriebes zugeordnet ist. Er liegt dann innerhalb des Getriebegehäuses und ist vor Verschmutzung und Beschädigungen geschützt. Dabei ist es besonders zweckmäßig, wenn der Sensor dem ausgangsseitigen Rad des Schalt- und Wendegetriebes zugeordnet ist. Eine kompakte Bauweise bleibt erhalten, indem die Abschaltkupplung funktionell dem Schalt- und Wendegetriebe zugeordnet ist.
Wie vorherig erwähnt kann der Sensor nicht nur den Stillstand eines Getriebes oder eines sonstigen Bauteiles überwachen, sondern auch noch weiter dazu benutzt werden, die Drehzahl der Walzen der Einzugsbaugruppe zu ermitteln, um daraus in Verbindung mit den Messertrommelparametern die Schnittlänge des Häckselgutes zu errechnen.

Anhand der beiliegenden Zeichnungen wird die Erfindung noch näher erläutert. Es zeigen:
Figur 1 die Einzugsbaugruppe mit den vorgeschalteten Querförderschnecken und der nachgeschalteten Messertrommel in einer Seitenansicht rein schematisch.
Figur 2 eine der Figur 1 entsprechende Draufsicht,
Figur 3 ein Blockschaltbild der elektrischen Anordnung und
Figur 4 die Abschaltkupplung als Einzelheit in einer perspektivischen Darstellung.

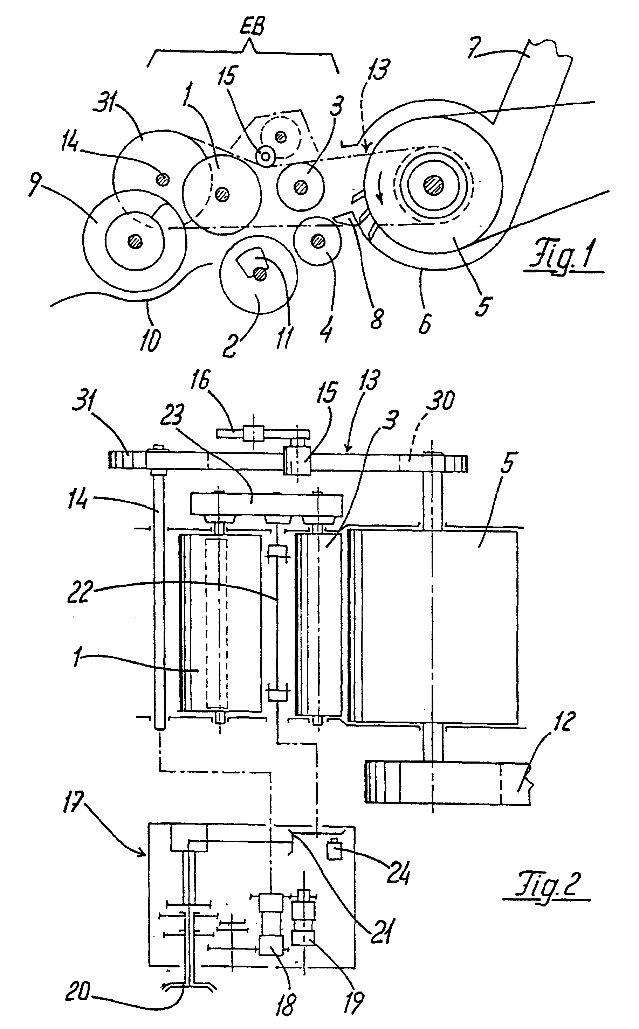

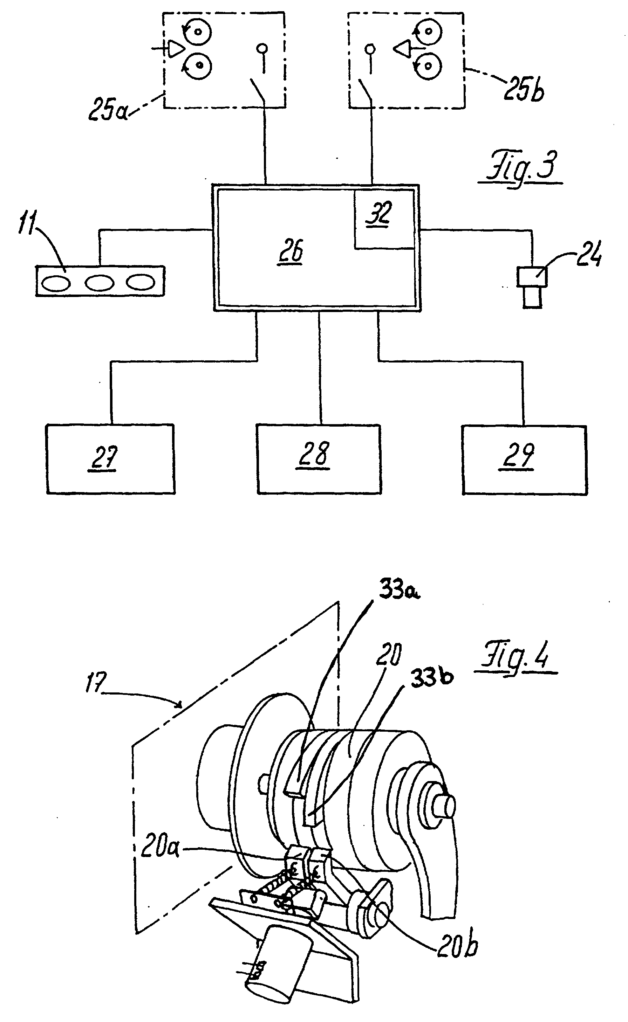

Der in den Figuren 1 und 2 dargestellte vordere Teil eines nicht dargestellten Feldhäckslers ist mit zwei achsparallelen Einzugswalzen 1 und 2 sowie zwei nachgeschalteten, achsparallelen Vorpreßwalzen 3, 4 ausgestattet. In Laufrichtung des Häckselgutes gesehen ist unmittelbar hinter den Vorpreßwalzen 3, 4 die gemäß der Darstellung nach der Figur 1 entgegen dem Uhrzeigersinn antreibbare Messertrommel 5 drehbar angeordnet, die in einem nicht näher erläuterten Trommelgehäuse 6 drehbar gelagert ist. An das Trommelgehäuse 6 schließt sich der aufsteigende Förderschacht 7 für das Häckselgut an. Zwischen den beiden Vorpreßwalzen 3, 4 und der Messertrommel 5 ist die feststehende Gegenschneide 8 angeordnet. Den Einzugswalzen 1, 2 sind zwei gegenläufige Querförderschnecken 9 seitlich vorgeschaltet, um das zu häckselnde Gut den Einzugswalzen 1, 2 zuzuführen. Unterhalb der Querförderschnecken 9 ist eine Wanne 10 angeordnet. Im dargestellten Ausführungsbeispiel ist der unteren Einzugswalze 2 eine Fremdkörperortungseinrichtung 11 zugeordnet, die vorzugsweise ein Metalldetektor ist. Der Antrieb der Messertrommel 5 erfolgt beispielsweise über einen Riemenantrieb 12, direkt vom nichtdargestellten Antriebsmotor des Feldhäckslers. Dieser Riemenantrieb 12 ist der Hauptantrieb des Feldhäckslers. Die zugehörige getriebene Scheibe ist auf ein Ende der Messertrommelwelle aufgesetzt. Auf das gegenüberliegende Ende ist die antreibende Riemenscheibe 30 eines weiteren Riemenantriebes 13 drehfest aufgesetzt. Mittels dieses Riemenantriebes 13 wird die getriebene Riemenscheibe 31 angetrieben, die ebenfalls drehfest auf eine Welle 14 aufgekeilt ist. Der Riemen des Riementriebs 13 wird über eine Spannrolle 15 ge- und entspannt. Die Spannrolle 15 kann mittels eines Spannhebels 16 geschwenkt werden, in dem in nicht dargestellter Weise ein Hydraulikzylinder den Spannhebel 16 verschwenkt.
Die Riemenscheibe 31 treibt über die Welle 14 ein schaltbares Getriebe 17 an. In dem Getriebe 17 wird die Drehbewegung der Welle 14 auf eine schaltbare Kupplung 18 übertragen. Der Kupplung 18 ist eine zweite schaltbare Kupplung 19 zugeordnet. Wie die Figur 2 zeigt, ist die erste Kupplung 18 mit zwei Zahnrädern ausgestattet, wobei ein Zahnrad mit einem Zahnrad der zweiten Kupplung 19 in Eingriff steht und das andere Zahnrad mit einem Zahnrad in Eingriff steht, welches das Eingangsrad eines Schaltgetriebes ist. Mittels der beiden Kupplungen 18, 19 kann die Drehrichtung des nachgeschalteten Getriebes in Vorwärts- und Rückswärtsdrehrichtung geschaltet werden, während mit der Räderanordnung die Geschwindigkeit bestimmt wird. Diese Räderanordnung steht mit einer in der Figur 4 näher dargestellten Abschaltkupplung 20 in einer Antriebsverbindung. Das Ausgangsglied des Wendegetriebes 17 ist ein Kegeltrieb 21. Mittels dieses Kegeltriebes wird über eine Welle 22 ein Stirnradgetriebe 23 angetrieben, um die Einzugswalzen 1, 2 und die Vorpreßwalzen 3, 4 anzutreiben. Im dargestellten Ausführungsbeispiel ist im Bereich des Kegeltriebes 21 ein Sensor 24 installiert.

Im Normalbetriebszustand wird die Spannrolle 15 in eine solche Position geschwenkt, daß die Einzugswalzen 1, 2 und die Vorpreßwalzen 3, 4 über die beschriebenen Antriebszüge mit konstanter Drehzahl angetrieben und das Erntegut zur Messertrommel 5 gefördert wird. Hat die Fremdkörperortungseinrichtung 11 ein Fremdkörper festgestellt, werden schlagartig die Einzugswalzen 1, 2 und die Vorpreßwalzen 3, 4 durch die entsprechende Schaltung der Abschaltkupplung 20 stillgesetzt. Gleichzeitig wird durch Schwenken des Spannhebels 16 der Riemen des Riemenantriebes 13 entspannt.
Wird eine Überlastung der Einzugsbaugruppe EB festgestellt, kann automatisch oder durch eine Betätigung eines Schalthebels in der Fahrerkabine die Abschaltkupplung 20 beziehungsweise nur der Riemenantrieb 13 angesteuert werden. In diesen beiden Fällen leitet der Fahrer des Feldhäckslers danach zunächst den Reversiervorgang ein, wodurch die Einzugswalzen 1, 2 und die Vorpreßwalzen 3, 4 in entgegengesetzter Drehrichtung angetrieben werden. Die eventuell gelöste Abschaltkupplung 20 wird dabei aus der blockierenden Stellung in eine kraftschlüssige Betriebsstellung umgeschaltet. Durch die Drehrichtungsumkehr der Abschaltkupplung 20 lösen sich gleichzeitg die Sperrklinken 20a, 20b von den Sperrnocken 33a,33b und geben diese frei. Der Reversiervorgang wird durch das lösen der Spannrolle 15 beendet. Der Fahrer kann nun nach dem Reversiervorgang die Fahrerkabine verlassen und vor den Einzugswalzen 1, 2 die Erntegutanhäufung auflösen beziehungsweise den Fremdkörper entfernen. Damit er gefahrlos arbeiten kann, ist jetzt die Überwachungseinrichtung 32 so geschaltet, daß selbst bei einer geringen Verdrehung des Kegeltriebes 21 in eine der beiden möglichen Drehrichtungen sofort ein Signal ausgelöst wird, um die Abschaltkupplung 20 in die Blockierstellung zu schalten. Soll das Häckseln anschließend fortgesetzt werden, muß der Fahrer zunächst kurzzeitig erneut den Reversiervorgang einleiten, wodurch die Blockierstellung der Abschaltkupplung aufgehoben wird.

Die Figur 3 zeigt ein Blockschaltbild zum Betrieb der Einzugsbaugruppe EB. In der Fahrerkabine ist am Fahrersitz ein Bedienhebel angeordnet an welchem zwei Schaltelemente 25a, 25b vorgesehen sind, um die Einzugswalzen 1, 2 und die Vorpreßwalzen 3, 4 entweder in die normale Arbeits- oder in Reversierdrehrichtung zu schalten, wie auch durch die Pfeile symbolisch dargestellt ist, beziehungsweise auch zu stoppen. Mit der Betätigung eines der Schaltelemente 25a, 25b wird der Einzugssteuerung 26 mitteilt welcher Betriebszustand von dem Fahrer des Feldhäckslers angewählt wurde. Bei stillstehenden Einzug- und Vorpreßwalzen bewirkt die Betätigung des Schaltelementes 25a, daß die Einzugs- und Vorpreßwalzen in Arbeitsdrehrichtung eingeschaltet werden. Wird bei stehenden Einzugs- und Vorpreßwalzen das Schaltelement 25b betätigt, werden die Einzugs- und Vorpreßwalzen auf Reversierdrehrichtung geschaltet. Bei eingeschalteten Einzugs- und Vorpreßwalzen in Arbeitsdrehrichtung bewirkt eine Betätigung des Schaltelementes 25b, daß die Einzugs- und Vorpreßwalzen über den Riemenantrieb 13 abgeschaltet werden.
Weiter steht die Einzugssteuerung 26 mit der Fremdkörperortungseinrichtung 11 und einem Sensor 24 in Verbindung. Die Einzugssteuerung 26 beinhaltet in dem dargestellten Beispiel auch die Überwachungseinrichtung 32. Der Riemenantrieb 13 wird durch eine elektrohydraulische Ansteuerung 28 eines nicht dargestellten Hydraulikzylinders und einer Riemenspanneinrichtung 15,16 ein- beziehungsweise ausgeschaltet. Die Drehrichtung der Einzugs- und Vorpreßwalzen wird mittels einer Steuerung 27 der Kupplung 19 von der Einzugssteuerung 26 vorgewählt. Für einen Schnellstopp der Einzugs- und Vorpreßwalzen wird die Abschaltkupplung 20 durch eine Steuerung 29 betätigt.
Die jeweiligen Funktionen und der Aufbau eines eventuelle vorhandenen Daten-Bussystem sowie einer Warneinrichtung und der Einrichtung 11 beziehungsweise der Steuerungen 26, 27, 28, 29, 32 sind bekannt und werden hier nicht näher erläutert.

Die Figur 4 zeigt die Abschaltkupplung 20. Sie ist direkt außenseitig an dem Getriebe 17 montiert. Die Abschaltkupplung besitzt zwei Sperrklinken 20a und 20b, die in Zusammenwirkung mit den Sperrnocken 33a,33b einen Schnellstopp der Walzen auslösen. Die Betätigung dieser Sperrklinken 20a und 20b erfolgt mittels eines kurzzeitig wirkenden Magnethubes, wobei die erste Klinke 20b die Abschaltkupplung 20 öffnet und die zweite Klinke 20a den angetriebenen Teil der Einzugsbaugruppe EB stoppt.

Die Überwachungseinrichtung kann an landwirtschaftlichen Erntemaschinen mit einer Einzugsbaugruppen Verwendung finden. Es ist dem Fachmann durchaus geläufig, den Gegenstand der Erfindung auch auf andere Einzugssteuerungen mit einer Sicherheitsbremseinrichtung anzuwenden.

### Bezugszeichenliste

- EB -: Einzugsbaugruppe
- 1 -: Einzugswalze
- 2 -: Einzugswalze
- 3 -: Vorpreßwalze
- 4 -: Vorpreßwalze
- 5 -: Messertrommel
- 6 -: Trommelgehäuse
- 7 -: Förderschacht
- 8 -: Gegenschneide
- 9: Querförderschnecke
- 10 -: Wanne
- 11 -: Fremdkörperortungseinrichtung
- 12 -: Riemenantrieb
- 13 -: Riemenantrieb
- 14 -: Welle
- 15 -: Spannrolle
- 16 -: Spannhebel
- 17 -: Getriebe
- 18 -: Kupplung
- 19 -: Kupplung
- 20 -: Abschaltkupplung
- 20a -: Sperrklinke
- 20b -: Sperrklinke
- 21 -: Kegeltrieb
- 22 -: Welle
- 23 -: Stirnradgetriebe
- 24 -: Sensor
- 25a -: Schaltelement Arbeitsdrehrichtung
- 25b -: Schaltelement Reversierdrehrichtung
- 26 -: Einzugssteuerung mit Überwachungseinrichtung
- 27 -: Steuerung Kupplung
- 28 -: Steuerung Riemenantrieb
- 29 -: Steuerung Abschaltkupplung
- 30 -: Riemenscheibe
- 31 -: Riemenscheibe
- 32 -: Überwachungseinrichtung
- 33a -: Sperrnocke
- 33b -: Sperrnocke

## Patentansprüche

1. Einrichtung zur Überwachung einer Einzugsbaugruppe einer landwirtschaftlichen Erntemaschine, insbesondere Feldhäcksler für Mais, Gras oder dergleichen
- mit einem schaltbaren Antriebszug, welcher die Einzugsbaugruppe antreibt,
- wobei mindestens eine Einrichtung zum zwangsweisen Stillsetzen der Einzugsbaugruppe vorhanden ist, die in eine das Antriebsdrehmoment übertragende und in eine die Drehung der Einzugsbaugruppe blockierende Stellung schaltbar ist,
**dadurch gekennzeichnet, dass**
- eine Überwachungseinrichtung (32) zur Überwachung des Stillstandes von mindestens einem drehfähigen Bauteil der Einzugsbaugruppe (EB) und/oder mindestens einem Antriebsteil des zugehörigen Antriebszuges vorgesehen ist, die
- wobei die Stillsetzung der Einzugsorgane (1 bis 4) durch Schalten der Einrichtung zum zwangsweisen Stillsetzen in die blockierende Stellung bei Erkennung einer Drehbewegung mittels der Überwachungseinrichtung (32) auslösbar ist.

2. Überwachungseinrichtung nach Anspruch 1,
**dadurch gekennzeichnet,**
**daß** die Überwachungseinrichtung (32) mit einer Steuerung für die Einzugsbaugruppe (EB) in Verbindung steht und/ oder Teil einer Einzugssteuerung (26) ist.

3. Überwachungseinrichtung nach mindestens einem der Ansprüche 1 bis 2,
**dadurch gekennzeichnet,**
**daß** die Einrichtung zum Stillsetzen der Einzugsbaugruppe (EB) eine Abschaltkupplung (20) ist.

4. Überwachungseinrichtung nach mindestens einem der Ansprüche 1 bis 3,
**dadurch gekennzeichnet,**
**daß** der Überwachungseinrichtung (32) ein Sensor (24) zugeordnet ist, welcher so angeordnet ist, daß er eine Drehbewegung eines Bauteils oder Antriebsteils von mindestens einem drehfähigen Bauteil der Einzugsbaugruppe (EB) und/ oder einem drehfähigen Antriebsteil des zugehörigen Antriebszuges erfaßt.

5. Überwachungseinrichtung nach Anspruch 4,
**dadurch gekennzeichnet,**
**daß** der Sensor (24) einem Antriebsteil (21) eines in den Antriebszug für die Einzugsbaugruppe (EB) liegenden Getriebes (17) zugeordnet ist.

6. Überwachungseinrichtung nach mindestens einem der Ansprüche 4 oder 5,
**dadurch gekennzeichnet,**
**daß** der Sensor (24) für mindestens eine weitere Überwachung- beziehungsweise Informationsfunktion der Einzugsbaugruppen (EB) verwendet wird.

7. Überwachungseinrichtung nach mindestens einem der Ansprüche 4 bis 6,
**dadurch gekennzeichnet,**
**daß** mittels des Sensors (24) mindestens eine Drehzahl einer der Einzugs- und Vorpreßwalzen der Einzugsbaugruppe (EB) ermittelt wird.

8. Überwachungseinrichtung nach mindestens einem der Ansprüche 4 bis 7,
**dadurch gekennzeichnet,**
**daß** mittels des Sensors (24) der Stillstand mindestens einer Einzugs- oder Vorpreßwalze der Einzugsbaugruppe (EB) ermittelt wird.

9. Überwachungseinrichtung nach mindestens einem vorherigen Ansprüche,
**dadurch gekennzeichnet,**
**daß** mittels des Sensors (24) die Zeit zwischen dem Befehl zum Stillsetzen und dem ermittelten Stillstand der Einzugsbaugruppe (EB) ermittelt wird.

10. Überwachungseinrichtung nach Anspruch 9,
**dadurch gekennzeichnet,**
**daß** aus der ermittelten Stillsetzungszeit eine Meldung über den Zustand der Einrichtung zur Stillsetzung der Einzugsbaugruppe (EB) generiert wird.

11. Überwachungseinrichtung nach mindestens einem der vorherigen Ansprüche,
**dadurch gekennzeichnet,**
**daß** die Überwachungseinrichtung (32) nur dann eine Stillsetzung der Einzugsbaugruppe (EB) auslöst, wenn von der Überwachungseinrichtung (32) eine Drehbewegung an der Einzugsbaugruppe (EB) erkannt wird, obwohl der Antrieb für die Einzugsbaugruppe (EB) nicht eingeschaltet wurde.

12. Überwachungseinrichtung nach mindestens einem der vorherigen Ansprüche,
**dadurch gekennzeichnet,**
**daß** die Überwachungseinrichtung (32) nur dann eine Stillsetzung der Einzugsbaugruppe (EB) auslöst, wenn von der Überwachungseinrichtung (32) eine Drehbewegung der Einzugsbaugruppe (EB) in Arbeitsdrehrichtung erkannt wird, obwohl der Antrieb für die Einzugsbaugruppe (EB) nicht eingeschaltet wurde.

## Claims

1. A device for monitoring an intake unit of an agricultural harvester, in particular a forage harvester for corn, grass or the like,
comprising a shiftable drive train which drives the intake unit,
- wherein there is at least one device for positively stopping the intake unit, which can be shifted into a position of transmitting the drive torque and into a position of blocking the rotation of the intake unit,
**characterised in that**
- there is provided a monitoring device (32) for monitoring the stoppage of at least one rotatable component of the intake unit (EB) and/or at least one drive member of the associated drive train,
- wherein stoppage of the intake members (1 to 4) can be triggered by shifting of the positively stopping device into the blocking position upon detection of a rotary movement by means of the monitoring device (32).

2. A monitoring device according to claim 1 **characterised in that** the monitoring device (32) is connected to a control for the intake unit (EB) and/or is part of an intake control (26).

3. A monitoring device according to at least one of claims 1 and 2 **characterised in that** the device for stopping the intake unit (EB) is a disengagement clutch (20).

4. A monitoring device according to at least one of claims 1 to 3 **characterised in that** associated with the monitoring device (32) is a sensor (24) so arranged that it detects a rotary movement of a component or drive member of at least one rotatable component of the intake unit (EB) and/or a rotatable drive member of the associated drive train.

5. A monitoring device according to claim 4 **characterised in that** the sensor (24) is associated with a drive member (21) of a transmission (17) disposed in the drive train for the intake unit (EB).

6. A monitoring device according to at least one of claims 4 and 5 **characterised in that** the sensor (24) is used for at least one further monitoring or information function of the intake units (EB).

7. A monitoring device according to at least one of claims 4 to 6 **characterised in that** at least one rotary speed of one of the intake and pre-pressing rollers of the intake unit (EB) is ascertained by means of the sensor (24).

8. A monitoring device according to at least one of claims 4 to 7 **characterised in that** the stoppage of at least one intake or pre-pressing roller of the intake unit (EB) is ascertained by means of the sensor (24).

9. A monitoring device according to at least one preceding claim **characterised in that** the time between the command for stoppage and the ascertained stoppage condition of the intake unit (EB) is ascertained by means of the sensor (24).

10. A monitoring device according to claim 9 **characterised in that** a message about the condition of the device for stopping the intake unit (EB) is generated from the ascertained stoppage time.

11. A monitoring device according to at least one of the preceding claims **characterised in that** the monitoring device (32) triggers a stoppage of the intake unit (EB) only when a rotary movement at the intake unit (EB) is detected by the monitoring device (32) although the drive for the intake unit (EB) was not cut in.

12. A monitoring device according to at least one of the preceding claims **characterised in that** the monitoring device (32) triggers a stoppage of the intake unit (EB) only when a rotary movement at the intake unit (EB) in the working direction of rotation is detected by the monitoring device (32) although the drive for the intake unit (EB) was not cut in.

## Revendications

1. Dispositif pour la surveillance d'un module d'alimentation d'une machine agricole de récolte, en particulier d'une ensileuse mobile pour le maïs, l'herbe ou similaire,
- avec un mécanisme de transmission débrayable qui entraîne le module d'alimentation,
- au moins un dispositif pour l'arrêt forcé du module d'alimentation étant prévu, lequel dispositif peut être commuté dans une position de transmission du couple d'entraînement et dans une position de blocage de la rotation du module d'entraînement,
**caractérisé**
- **en ce qu'**il est prévu un dispositif de surveillance (32) pour surveiller l'arrêt d'au moins un organe tournant du module d'alimentation (EB) et/ou d'au moins un élément d'entraînement du mécanisme de transmission correspondant,
- l'arrêt des organes d'alimentation (1 à 4) pouvant être déclenché par commutation du dispositif d'arrêt forcé dans la position de blocage, lorsque le dispositif de surveillance (32) détecte un mouvement de rotation.

2. Dispositif de surveillance selon la revendication 1, **caractérisé en ce que** le dispositif de surveillance (32) est relié à une commande pour le module d'alimentation (EB) et/ou fait partie de la commande de l'alimentation (26).

3. Dispositif de surveillance selon au moins une des revendication 1 à 2, **caractérisé en ce que** le dispositif d'arrêt du module d'alimentation (EB) est un embrayage de sécurité (20).

4. Dispositif de surveillance selon au moins une des revendication 1 à 3, **caractérisé en ce qu'**au dispositif surveillance (32) est associé un capteur (24) qui est disposé de telle sorte qu'il détecte un mouvement de rotation d'un organe ou d'un élément d'entraînement d'au moins un organe tournant du module d'alimentation (EB) et/ou d'un élément d'entraînement tournant du mécanisme de transmission associé.

5. Dispositif de surveillance selon la revendication 4, **caractérisé en ce que** le capteur (24) est associé à un élément d'entraînement (21) d'un réducteur (17) placé dans le mécanisme de transmission du module d'alimentation (EB).

6. Dispositif de surveillance selon au moins une des revendications 4 ou 5, **caractérisé en ce que** le capteur (24) est utilisé pour au moins une fonction supplémentaire de surveillance ou d'information du module d'alimentation (EB).

7. Dispositif de surveillance selon au moins une des revendications 4 à 6, **caractérisé en ce qu'**à l'aide du capteur (24) on détermine au moins une vitesse de rotation de l'un des tambours d'alimentation et de précompression du module d'alimentation (EB).

8. Dispositif de surveillance selon au moins une des revendications 4 à 7, **caractérisé en ce qu'**à l'aide du capteur (24) on détermine l'arrêt d'au moins un tambour d'alimentation et de précompression du module d'alimentation (EB).

9. Dispositif de surveillance selon au moins une des revendications précédentes, **caractérisé en ce qu'**à l'aide du capteur (24) on mesure le temps écoulé entre l'ordre d'arrêt et l'arrêt constaté du module d'alimentation (EB).

10. Dispositif de surveillance selon la revendication 9, **caractérisé en ce qu'**à partir du temps mesuré pour l'arrêt on génère une information sur l'état du dispositif d'arrêt du module d'alimentation (EB).

11. Dispositif de surveillance selon au moins une des revendications précédentes, **caractérisé en ce que** le dispositif de surveillance (32) déclenche un arrêt du module d'alimentation (EB) seulement lorsque le dispositif de surveillance (32) détecte un mouvement de rotation au niveau du module d'alimentation (EB) alors que l'entraînement pour le module d'alimentation (EB) n'est pas enclenché.

12. Dispositif de surveillance selon au moins une des revendications précédentes, **caractérisé en ce que** le dispositif de surveillance (32) déclenche un arrêt du module d'alimentation (EB) seulement lorsque le dispositif de surveillance, (32) détecte un mouvement de rotation du module d'alimentation (EB) dans le sens de rotation de travail alors que l'entraînement pour le module d'alimentation (EB) n'est pas enclenché.
